# EUROPEAN PATENT SPECIFICATION

(11) **EP 1 662 201 B1**
(45) Date of publication and mention of the grant of the patent: **17.02.2016**
(21) Application number: 05257389.6
(22) Date of filing: 30.11.2005
(51) Int. Cl.: F23R 3/00, F23M 5/02, F23R 3/50

(54) **Tile and exo-skeleton tile structure**
Kachel und Exoskelett-Kachel-Struktur
Tuile et structure exosquelettique de tuiles

(30) Priority: 30.11.2004 GB 0426235
(43) Date of publication of application: 31.05.2006
(73) Proprietor: ALSTOM Technology Ltd, 5400 Baden (CH)
(72) Inventor: Hodder, David, Enderby Leicester LE19 4NZ (GB)
(74) Representative: Pesce, Michele

(56) References cited:
- EP-A- 0 647 817
- WO-A-99/64791
- DE-A1- 4 309 200
- US-A- 4 158 949

## Description

### Field of the Invention

The present invention relates to a generally part-annular tile and to an exo-skeleton tile structure, suitable for an annular combustion chamber liner shell to facilitate cooling of the liner shell by axial gas flow along the gap therebetween. It is particularly useful in gas turbines whose combustion chambers have inner and outer liner shells each requiring cooling.

### Background of the Invention

Document EP 647817 discloses a gas turbine engine with an annular combustion chamber, comprising an annular inner liner shell and an annular outer liner shell. A tile structure is applied either to the external or to the internal surface of at least one of the outer or inner wall. For assembling and replacing the tiles without the necessity of disassembling the structural wall of the combustion chamber, the front and rear edge portions of the tiles define circumferentially extending grooves, configured to slidably receive complementary annular strips. One of said strips defines a circumferential cut-out, the circumferential dimension of which is slightly wider than the respective width of a tile. In order to apply the tiles to the combustion chamber structure, the tiles are consecutively inserted through the cut-out and afterwards the tiles are moved in a circumferential direction to permit the insertion of a next subsequent tile etc. (see arrow F in Fig.1 of that document). The tiles may be affixed either to the external or internal combustion chamber walls. The tiles themselves are formed from three superposed components, an inner layer, an outer layer and a porous metallic material, e.g. a metallic foam, in between.

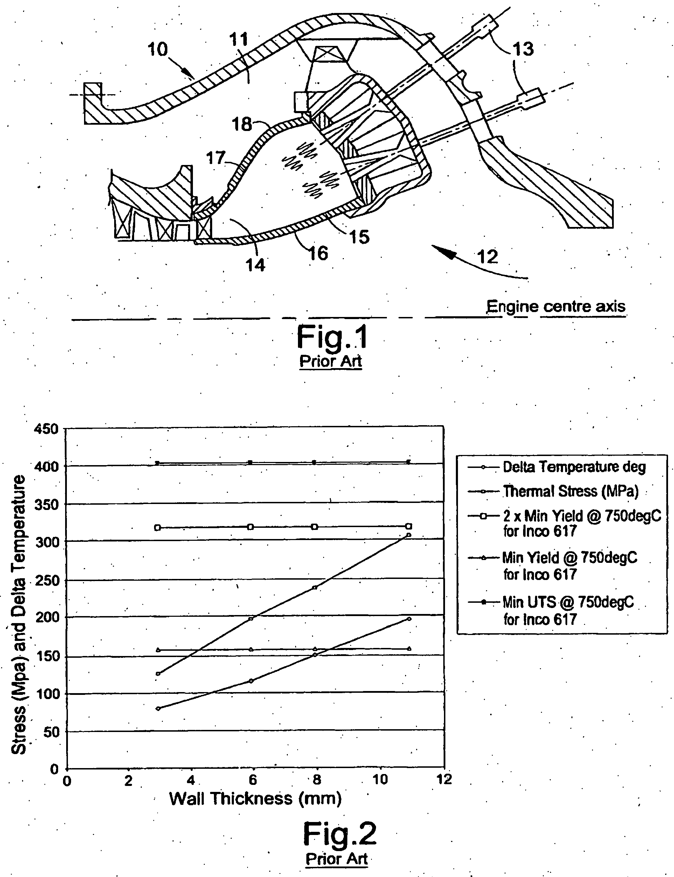

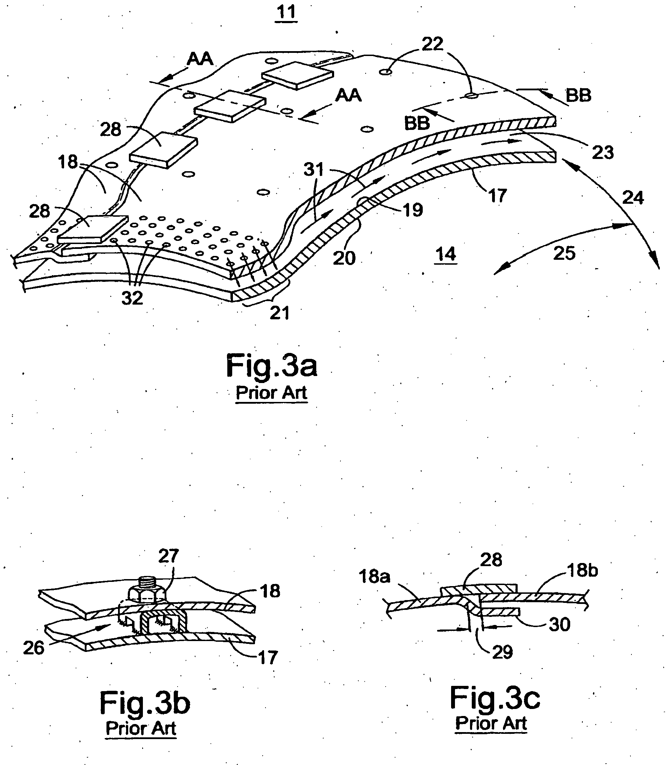

As shown in Figures 1 and 3, an existing Alstom gas turbine, the GT13® E2, comprises an engine 10 receiving compressor gas into its plenum 11 in the direction 12. This gas is fed through a burner system 13 and into a combustion chamber 14 at lower pressure than the plenum 11, where it is combined with fuel and ignited. The lower pressure in the combustion chamber 14 means that the liner shell, comprising an inner liner shell 15 and an outer liner shell 17, both generally annular, have to withstand the differential pressures. In addition to the requirement to resist external pressure, the liner shells need to withstand high internal temperatures up to 500 deg. C or higher, and need to provide sufficient resistance to thermally-induced and pressure-induced stresses, creep and buckling failure modes which would otherwise result in an unacceptable component life. The shells need to be sufficiently rigid during operation and resistant to flexing during handling, to avoid damage to themselves and to any coatings applied to them. Cooling of the liner shells is usually provided in the form of impingement and/or convection cooling from the cold side of the shell wall. Channels or an annular cooling flow space are provided by an external structure, in the form of an exo-skeleton tile structure. A tile structure 16 of generally annular shape covers the inner liner shell 15, and correspondingly a similar tile structure 18 covers the outer liner shell 17.

As shown in Figure 3a, which is a perspective view of parts of two adjacent tiles 18, linked edgewise parallel to the axial direction 25 of the engine, impingement flows 21 are caused by a multiplicity of apertures 32 through the tiles. Further, there are convection flows 31 along the annular gap 23 between the cold side 19 of the liner shell 17 and the exo-skeleton tile structure 18. The hot side 20 of the liner shell 17 is heated by the combustion within the combustion chamber 14. The tiles 18 each have an edge strip 30 at a different radius from the remainder of the tile 18a, Figure 3c, which accommodates the opposite edge of an adjacent tile 18b. The radial difference is the same as the thickness of the tile. This allows the adjacent tiles 18a, 18b to present a generally annular surface, even though they overlap. Retention tabs 28 are provided periodically along the edge to cover the edge strip 30, so as to retain the opposite edge of the adjacent tile 18b whilst allowing for circumferential expansion 29.

As shown in Figure 3b, U clips 26, welded onto the cold side 19 of the liner shell 17, have integral studs which project through apertures 22 in the tiles 18. Nuts and Belleville washers 27 secure the studs in place, and locate the exo-skeleton tile structure over the liner shell 17.

This exo-skeleton tile structure resists bending in the axial and shear directions but has the disadvantage of having a low resistance to bending about the axially-extending edges of the adjacent tiles.

Figure 2 is a series of graphs showing the temperature gradient and the thermal stresses resulting from a given constant thermal loading applied to liner shells of different wall thicknesses. The thermal stress is applied to a skin with a 1 mm TBC (Thermal Barrier Coating) on a high temperature turbine component which has active cooling. The coating is a ceramic type coating commonly containing Yttrium with a bond coat system. TBC provides the surface with additional temperature capability, acts as a reflector of radiation to reduce the overall heat flux and provides a small degree of insulation. There is convective cooling using a 1 mm rib height: a rib is provided on the cold side of the hot liner shell and acts as a turbulator to enhance the cooling convective heat transfer coefficient. Delta temperature, i.e. the difference in temperature across the skin, increases, as expected with wall thickness. Thermal stress also increases substantially with wall thickness. From this, it can be seen that there has to be a trade-off between component life, with respect to thermal stresses, on the one hand, and resistance to pressure buckling, on the other hand. A thin liner shell is preferred, for resisting thermal gradient stresses. However, resistance to buckling failure modes, particularly for the outer liner shell, is compromised by such thinner walls.

This explains the need for structural support external to the liner shell. The problem with the existing exo-skeleton tile structure with regard to this support is that, whilst it is capable of expansion in the circumferential direction, to accommodate changes in use, it offers little or no rigidity to bending in this circumferential direction.

Further, it is necessary to consider vibration modes in the gas turbine in use, and the existing configuration of exo-skeleton tile structure offers little opportunity for the tuning out of problematic resonances in the combined structure.

Accordingly, the purpose of the invention is to mitigate the disadvantages and limitations of the existing exo-skeleton tile structure.

### Summary of the Invention

The present invention accordingly provides a generally part-annular tile with means for connection, in use, to an underlying annular liner shell, such as a gas turbine combustion chamber liner shell, and formed with at least one rib extending circumferentially across the outer surface of the tile and projecting beyond one edge of the tile, such that like tiles may be linked at their edges by the inter-engagement of a projecting rib of one tile with the rib of an adjacent tile, to form a complete, generally annular structure in use, the inter-engagement being such that the ribs of adjacent tiles are relatively slideable circumferentially, to allow thermal expansion and contraction of the annular structure in use, but such as to resist relative bending of the adjacent tiles about their linked edges, to impart rigidity to the structure, wherein the at least one rib has at one end a portion projecting beyond the tile edge, and at the opposite end a socket for receiving slidingly the projecting portion of the rib of an adjacent like tile to form said inter-engagement, the socket providing the radial reaction force to prevent the relative bending of the tiles in use.

Preferably, the tile has a multiplicity of apertures to allow coolant gas to flow through the tile into the gap between the tile and the liner shell, and to impinge on the external surface of the liner shell. It is also preferred that the tile has a strip of different radius at one of its edges, so that the opposite edge of an adjacent like tile can overlap that strip to allow the tiles to present a generally continuous annular surface.

Said socket may comprise a further, parallel rib to one side of the end of the main rib, and a socket top cover bridging the parallel ribs. With regard to its comparative dimensions, the socket may extend circumferentially over between 1/5 and 1/2 of the width of the tile, preferably between 1/4 and 1/3 of the width of the tile.

Conveniently, the rib is of rectangular section with one edge connected to the tile, the rib projecting radially from the tile normal to its surface. To enhance the stiffness of the tile, there are preferably at least two parallel circumferential ribs; there may also be at least one axially-extending stiffening rib crossing the said circumferential rib or ribs.

The connection means between the tile and the liner shell may comprise apertures, through the tiles for co-operating with studs projecting radially from the liner shell.

With regard to materials, and assuming use in a gas turbine combustor system, the tile should be formed of high strength weldable metal alloy capable of withstanding 500 deg. C, for example, an indium cobalt alloy such as Inco® 617. The rib or ribs is or are connected to the tile by brazing or TIG-type welding to transmit shear loading.

To assist assembly of each tile into a structure of which it forms a part, it may comprise means for temporarily fixing together a rib of one tile with the socket of an adjacent tile against circumferential sliding movement, the rib and socket of each tile being formed to receive the fixing means. The fixing means may comprise pins, and in this case the ribs are formed to accommodate pins extending axially of the tile.

Regarding relative dimensions of the tile, it may have an angular extent around the circumference of the liner shell of from 5 degrees to 15 degrees, preferably 10 degrees to 15 degrees.

Further the invention provides a generally annular exo-skeleton tile structure for an annular liner shell to facilitate cooling of the liner shell by axial gas flow along the gap therebetween, comprising part-annular tiles, the tiles being linked together edgewise by the inter-engagement of external circumferentially-extending ribs on the outer surfaces of the tiles, the inter-engagement being such that the ribs of adjacent tiles are relatively slideable circumferentially, to allow thermal expansion and contraction of the annular structure in use, but such as to resist relative bending of the adjacent tiles about their linked edges, to impart rigidity to the structure; the tiles having means for connection to the underlying liner shell in use.

Further, the invention provides a gas turbine structure comprising a combustion chamber whose liner shell has an exo-skeleton tile structure.

Further still, the invention provides a method of forming a generally annular exo-skeleton tile structure over an annular liner shell, comprising connecting a plurality of part-annular tiles to the liner shell with their edges linked together and their ribs inter-engaging to prevent bending along the edges. As previously mentioned, assembly can be aided by pinning the ribs of adjacent tiles together during assembly, the pins being removed after assembly. The above-mentioned socket top cover can be connected after the ribs have been inter-engaged.

Wear coatings, such as Stellite® 6, can be applied to the tiles, or to the liner shells, or both, including the ribs.

The rib in each tile, capable of inter-engaging the rib of an adjacent tile, provides circumferential stiffening and overcomes the previous problem of bending in the circumferential direction.

A further advantage of the invention is that the tuning of resonant vibration modes becomes possible by optimising the number and location of the stiffening ribs.

Damping of vibrational modes is facilitated by friction inherent in the sliding joints between inter-engaging ribs.

Further features of the invention will be apparent from a perusal of the following description and the appended claims.

### Brief Description of the Drawings

In order that the invention may be better understood, a preferred embodiment of the invention will now be described, by way of example only, with reference to the accompanying drawings, in which:
Figure 1, to which reference has already been made, is an axial section through part of a gas turbine engine;
Figure 2, to which reference has already been made, is a table illustrating temperature gradient and thermal stress in various different liner shells of a combustion chamber of a gas turbine engine as shown in Figure 1;
Figures 3a to 3c, to which reference has already been made, illustrate an existing structure for an exo-skeleton tile structure overlying a liner shell of the type shown in Figure 1, Figure 3a being a partial perspective view showing parts of two adjacent tiles; Figure 3b being a section taken along the line BB of Figure 3a and showing an interconnection between the liner shell and the tile; and Figure 3c being a section taken along AA of Figure 3a, across the inter-engaging edges of two adjacent tiles;
Figure 4 is a perspective view of one tile embodying the invention;
Figure 5 is a section CC through the tile of Figure 4, showing a sliding joint arrangement between adjacent tiles; and
Figure 6 is a partial perspective view of two inter-engaging tiles, showing the use of pins for temporarily locking the ribs of adjacent tiles together.

### Detailed Description of the Preferred Embodiments

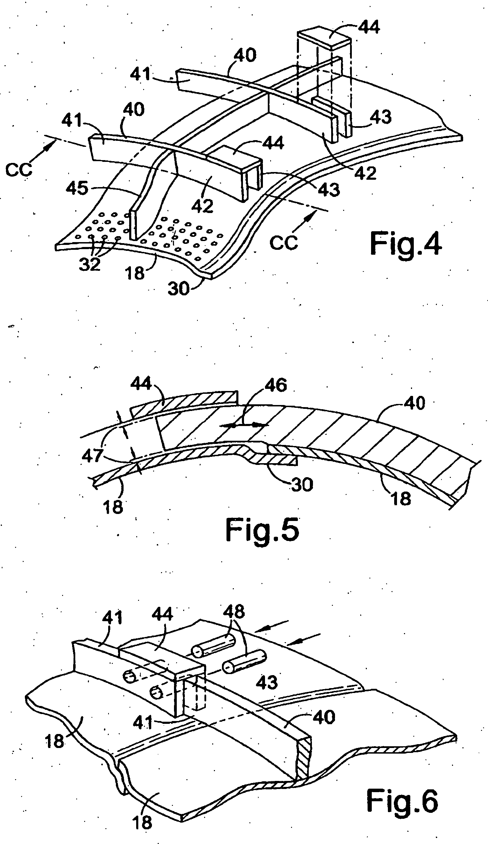

As shown in Figures 4 and 5, the tile 18, formed of Inco® 617 and resistant to at least 500° C, has two strengthening ribs 40 extending circumferentially, and at least one rib 45 extending axially, the ribs being fastened to the tile surface by brazing or TIG type welding, so as to be capable of transmitting shear loading. In this example, there are two parallel circumferential ribs 40, and one axial stiffening rib 45 which crosses the circumferential ribs 40, but it will be apparent that the number of each type of rib is selectable; in some applications there may be no axial stiffening ribs 45 and there may be one or else three or more circumferential ribs 40.

Each rib has a rectangular section (although other sections could instead be selected - say circular) and extends normally from the cold surface of the tile 18. The tile presents a generally annular surface, whose radius varies along the axis, i.e. the diameter of the exo-skeleton tile structure varies along the length of the engine. The tile 18 subtends, in this example, an angle of approximately 15 deg. in the circumferential direction 24, and the complete structure would therefore require 24 inter-engaging tiles (18) joined edgewise. In other examples, the range of angles for each tile could be between say 5 deg. and 15 deg., preferably 10 deg. to 15 deg.; segments subtending much more than 15 deg. would begin to develop significant meridional stress issues.

Each circumferential rib 40 has at one end a projecting portion 41 beyond the edge of the tile. This engages in a socket 42 formed by the opposite end of the rib 40 of an adjacent tile. The socket is formed by one end 41 of the rib 40, by a parallel and adjacent short rib 43, and by a socket top cover in the form of a rectangular plate 44 bridging the ribs 41 and 43. The socket extends circumferentially over between 1/5 and 1/2, and preferably between 1/4 and 1/3 of the width of the tile 18.

As shown more clearly in Figure 5, the rib 40 is free to slide in the circumferential direction 46 within the socket. The socket top cover 44 is separated from the inner surface of the tile 18 by a gap slightly greater in the radial direction than the height of the rib 40 which it accommodates, so as to provide a sliding clearance 47 which is small enough to limit bending by virtue of the contact between the rib 40 and the top cover 44 and the tile skin 18. Thus the top cover arid the tile provide radial reaction forces acting on the rib 40 to prevent or at least to limit the bending motion, i.e. the ability of adjacent tiles 18a, 18b to bend along their adjacent edge. A total clearance of say 2% of the socket engagement length would permit an angular miss-alignment of 1.145 deg. tile to tile. The actual angle tolerable may be determined by experiment. The lower limit of the clearance would be determined by the incidence of binding.

In other respects, each tile 18 has the features of the conventional tile shown in Figure 3, including the apertures 22 for receiving studs welded to the liner shell 17. The multiplicity of small apertures 32 for impingement flow is illustrated in Figure 4.

As shown in Figure 6, the sockets and the projecting portions 41 of the ribs 40 are formed with apertures for accommodating the pair of pins 48 which are assembled by pushing them axially through the apertures to lock the tile joints. This provides extra rigidity during handling pre-assembly, but the pins must be removed after assembly and before use, to allow for thermal circumferential expansion at the joints (the extra rigidity during handling being provided to protect the TBC coating system from excessive handling damage caused by deflections to the inner shell liner prior to installation).

The exo-skeleton tile structure is assembled over the liner shell by locating each successive tile 18 over the studs and inter-engaging the edges of adjacent tiles 18a, 18b, with the projecting portions of the ribs sliding into the sockets 42. The nuts and washers 27 are then secured over the studs. This process may be facilitated by leaving the sockets 42 open at the top until after assembly, i.e. by brazing or welding the top covers 44 once the tiles 18 are in place.

The tuning of resonant vibration modes is possible by optimisation of the stiffening ribs 41 and 45, and damping is facilitated by friction in the sliding joints between the ribs and the sockets.

Use of the exo-skeleton tile structure according to the invention facilitates the use of still thinner liner shell structures in gas turbines, and this leads to consequential improvements in the thermal low cycle fatigue (LCF) component life. It further allows for enhanced tuning of problematic vibration modes by optimising rib stiffness, and allows for mechanical damping by energy absorption due to friction in the sliding cavities of the sockets.

The wear coatings applied to the tiles (or to the liner shells or both) including the ribs are selected in accordance with the outcome of tribology tests, and one example of a suitable coating is Stellite® 6.

## Claims

1. A generally part-annular tile (18) provided with means for connection to an underlying annular liner shell (17), and formed with at least one rib (40) extending circumferentially across an outer surface of the tile (18) and projecting beyond one edge of the tile, such that in use like tiles (18) are linked at opposite edges by the inter-engagement of a projecting rib (40) of one tile (18a) with the rib (40) of an adjacent tile (18b), to form a complete, generally annular structure, the inter-engagement being such that the ribs (40) of adjacent tiles (18a, 18b) are relatively slideable circumferentially, to allow thermal expansion and contraction of the annular structure in use, but such as to resist relative bending of the adjacent tiles (18) about their linked edges, to impart rigidity to the structure, wherein said at least one rib (40) has at one end a portion (41) projecting beyond the tile edge, and at the opposite end a socket (42) for receiving slidingly the projecting portion (41) of the rib (40) of an adjacent like tile (18a, 18b) to form said inter-engagement, the socket (42) providing the radial reaction force to prevent the relative bending of the tiles (18) in use.

2. A tile according to Claim 1, having a multiplicity of apertures (32) for impingement flow of gas through the tile (18) and into the gap (23) between the tile (18) and the liner shell (17) in use.

3. A tile according to Claim 1 or Claim 2, having a strip (30) of different radius at one of its edges, so that the opposite edge of an adjacent like tile (18a, 18b) overlaps that strip (30), in use, to allow the tiles (18) to present a generally continuous annular surface.

4. A tile according to Claim 1, in which the socket (42) comprises a further, parallel rib (43) to one side of the end of the main rib (40), arid a socket top cover (44) bridging the parallel ribs (40, 43).

5. A tile according to Claim 4, in which the socket (42) extends circumferentially over between 1/5 and 1/2 of the width of the tile (18).

6. A tile according to Claim 5, in which the socket (42) extends circumferentially over between 1/4 and 1/3 of the width of the tile (18).

7. A tile according to any preceding claim, in which the rib (40) is of rectangular section with one edge connected to the tile (18), and the rib (40) projects radially from the tile (18) normal to its surface.

8. A tile according to any preceding claim, comprising at least two parallel circumferential ribs (40).

9. A tile according to any preceding claim, comprising at least one axially-extending stiffening rib (45) crossing the said circumferential rib or ribs (40).

10. A tile according to any preceding claim, in which said means for connection to said underlying annular liner shell (17) comprise apertures (22) through the tiles (18) for co-operating with studs projecting radially from the liner shell (17).

11. A tile according to any preceding claim, formed of high strength weldable metal alloy capable of withstanding 500° C.

12. A tile according to Claim 11, formed of indium cobalt alloy.

13. A tile according to any preceding claim, in which the rib or ribs (40) is or are connected to the tile (18) by brazing or TIG type welding to transmit shear loading in use.

14. A tile according to any preceding claim, having a radius which varies smoothly along the engine centre axis.

15. A tile according to Claim 1, comprising means for temporarily fixing together a rib (40) of one tile (18a) with the socket (42) of an adjacent tile (18b) against circumferential sliding movement, to assist assembly, the rib (40) and socket (42) of each tile (18, 18a, 18b) being formed to receive the fixing means.

16. A tile according to Claim 15, in which the fixing means comprise pins (48) and the ribs (40) are formed to accommodate the pins (48) extending axially of the tile (18).

17. A tile according to any preceding claim, in which the tile (18) subtends circumferentially an angle of from 5 degrees to 15 degrees.

18. A tile according to Claim 17, subtending a circumferential angle of from 10 degrees to 15 degrees.

19. A generally annular exo-skeleton tile structure for an annular liner shell (17) to facilitate cooling of the liner shell (17) by axial gas flow (31) along the gap (23) therebetween, comprising part-annular tiles (18) according to any preceding claim, the tiles (18) being linked together edgewise by the inter-engagement of external circumferentially-extending ribs (40) on the outer surfaces of the tiles (18), the inter-engagement being such that the ribs (40) of adjacent tiles (18, 18a, 18b) are relatively slideable circumferentially, to allow thermal expansion and contraction of the annular structure in use, but such as to resist relative bending of the adjacent tiles about their linked edges, to impart rigidity to the structure; the tiles (18) having means for connection to the underlying liner shell (17) in use.

20. A tile structure according to Claim 19, in which each tile (18) is in accordance with Claim 3, the tiles (18) being linked by overlapping the strip (30) of one tile (18a) with the opposite edge of an adjacent tile (18b) so that the exo-skeleton tile structure (18) has a substantially annular surface.

21. A tile structure according to Claim 19 or 20, in which each tile (18) is in accordance with Claim 14, in which the exo-skeleton tile structure (18) has a radius which varies smoothly along the engine centre axis.

22. A gas turbine structure comprising a combustion chamber (14) whose liner shell (17) has an exo-skeleton tile structure (18) according to any of Claims 19 to 21 connected to it.

23. A gas turbine structure according to Claim 22, in which the interconnection between the exo-skeleton tile structure (18) and the liner shell (17) is through studs projecting through apertures (22) in the exo-skeleton tile structure (18).

24. A method of forming a generally annular exo-skeleton tile structure over an annular liner shell (17), comprising connecting a plurality of part-annular tiles (18) according to any of Claims 1 to 18 to the liner shell (17) with their edges linked together and their ribs (40) inter-engaging to prevent bending along the edges.

25. A method according to Claim 24, comprising pinning the ribs (40) of adjacent tiles (18a, 18b) together during assembly and then removing the pins (48) prior to use.

26. A method according to Claim 24 or Claim 25, in which each tile (18) is in accordance with Claim 5, comprising connecting the socket top cover (44) after the ribs (40) have been inter-engaged.

## Patentansprüche

1. Allgemein teilringförmige Platte (18), mit Mitteln zum Verbinden mit einer darunterliegenden ringförmigen Ummantelungsschale (17) versehen und mit mindestens einer Rippe (40) gebildet, die sich umlaufend an einer Außenfläche der Platte (18) erstreckt und über eine Kante der Platte hinausragt, so dass beim Einsatz gleicher Platten (18) diese an gegenüberliegenden Kanten durch Eingreifen einer vorragenden Rippe (40) einer Platte (18a) in die Rippe (40) einer benachbarten Platte (18b) verbunden werden, um eine komplette, im Allgemeinen ringförmige Struktur zu bilden, wobei das Eingreifen derart erfolgt, dass die Rippen (40) von benachbarten Platten (18a, 18b) entlang des Umfangs relativ verschiebbar sind, um eine thermische Ausdehnung und Zusammenziehung der ringförmigen Struktur im Einsatz zu ermöglichen, aber so, dass sie dem relativen Biegen der benachbarten Platten (18) um ihre verbundenen Kanten widerstehen, um der Struktur Festigkeit zu verleihen, wobei die mindestens eine Rippe (40) an einem Ende ein Teil (41) hat, das über die Plattenkante hinausragt, und am entgegengesetzten Ende eine Buchse (42) zum gleitenden Aufnehmen des vorragenden Teils (41) der Rippe (40) einer benachbarten gleichen Platte (18a, 18b) hat, um den Eingriff zu bilden, wobei die Buchse (42) für die radiale Reaktionskraft sorgt, um die relative Biegung der Platten (18) im Einsatz zu verhindern.

2. Platte nach Anspruch 1, die mehrere Öffnungen (32) für den im Betrieb beaufschlagten Gasstrom durch die Platte (18) und in die Lücke (23) zwischen der Platte (18) und der Ummantelungsschale (17) aufweist.

3. Platte nach Anspruch 1 oder 2, die einen Streifen (30) von unterschiedlichem Radius an einer ihrer Kanten hat, so dass die entgegengesetzte Kante einer benachbarten gleichen Platte (18a, 18b) diesen Streifen (30) im Einsatz überlappt, so dass die Platten (18) eine im Allgemeinen kontinuierliche ringförmige Fläche aufweisen.

4. Platte nach Anspruch 1, wobei die Buchse (42) eine weitere parallele Rippe (43) auf einer Seite des Endes der Hauptrippe (40) und eine Buchsenabdeckung (44) umfasst, die die parallelen Rippen (40, 43) überbrückt.

5. Platte nach Anspruch 4, bei der die Buchse (42) sich umlaufend über zwischen 1/5 und 1/2 der Breite der Platte (18) erstreckt.

6. Platte nach Anspruch 5, bei der die Buchse (42) sich umlaufend über zwischen 1/4 und 1/3 der Breite der Platte (18) erstreckt.

7. Platte nach einem der vorherigen Ansprüche, bei der die Rippe (40) einen rechteckigen Abschnitt mit einer Kante hat, die mit der Platte (18) verbunden ist, und die Rippe (40) sich radial von der Platte (18) aus senkrecht zu ihrer Oberfläche vorragt.

8. Platte nach einem der vorherigen Ansprüche, die mindestens zwei parallele umlaufende Rippen (40) umfasst.

9. Platte nach einem der vorherigen Ansprüche, die mindestens eine sich axial erstreckende Versteifungsrippe (45) umfasst, die die umlaufende Rippe oder Rippen (40) quert.

10. Platte nach einem der vorherigen Ansprüche, bei der das Mittel zum Verbinden mit der darunterliegenden ringförmigen Ummantelungsschale (17) Öffnungen (22) durch die Platten (18) zum Zusammenwirken mit Stiften umfasst, die radial von der Ummantelungsschale (17) aus vorragen.

11. Platte nach einem der vorherigen Ansprüche, die aus hochfester schweißbarer Metalllegierung gebildet ist, die 500 °C widerstehen kann.

12. Platte nach Anspruch 11, die aus einer Indium-Kobalt-Legierung gebildet ist.

13. Platte nach einem der vorherigen Ansprüche, bei der die Rippe oder Rippen (40) mit der Platte (18) durch Hartlöten oder WIG-Schweißen verbunden ist bzw. sind, um eine Scherbelastung im Einsatz zu übertragen.

14. Platte nach einem der vorherigen Ansprüche, die einen Radius hat, welcher gleichmäßig entlang der Maschinenmittelachse variiert.

15. Platte nach Anspruch 1, die Mittel zum zeitweiligen Fixieren einer Rippe (40) einer Platte (18a) an der Buchse (42) der benachbarten Platte (18b) gegen eine umlaufende Gleitbewegung, zur Unterstützung bei der Montage umfasst, wobei die Rippe (40) und die Buchse (42) jeder Platte (18, 18a, 18b) so geformt sind, dass sie das Fixierungsmittel aufnehmen.

16. Platte nach Anspruch 15, bei der das Fixierungsmittel Stifte (48) umfasst und die Rippen (40) so geformt sind, dass sie die Stifte (48) aufnehmen, die sich axial zur Platte (18) erstrecken.

17. Platte nach einem der vorherigen Ansprüche, wobei die Platte (18) am Umfang einen Winkel von 5 Grad bis 15 Grad schneidet.

18. Platte nach Anspruch 17, die einen Umfangswinkel von 10 Grad bis 15 Grad schneidet.

19. Allgemein ringförmige Exoskelett-Plattenstruktur für eine ringförmige Ummantelungsschale (17) zur leichteren Kühlung der Ummantelungsschale (17) durch axialen Gasstrom (31) entlang einer Lücke (23) zwischen der Ummantelungsschale (17), die teilringförmige Platten (18) nach einem der vorherigen Ansprüche umfasst, wobei die Platten (18) seitlich durch Eingriff von externen, sich umlaufend erstreckenden Rippen (40) auf den Außenflächen der Platten (18) miteinander verbunden sind, wobei der Eingriff so erfolgt, dass die Rippen (40) von benachbarten Platten (18, 18a, 18b) relativ am Umfang verschiebbar sind, um eine thermische Ausdehnung und Zusammenziehung der ringförmigen Struktur beim Einsatz zu ermöglichen, aber so, dass die relative Biegung der benachbarten Platten um ihre verbundenen Kanten vermieden wird, um der Struktur Festigkeit zu verleihen; wobei die Platten (18) im Betrieb Mittel zum Verbinden mit der darunterliegenden Ummantelungsschale (17) aufweisen.

20. Plattenstruktur nach Anspruch 19, bei der jede Platte (18) Anspruch 3 erfüllt, wobei die Platten (18) durch Überlappen des Streifens (30) von einer Platte (18a) mit der entgegengesetzten Kante einer benachbarten Platte (18b) verbunden werden, so dass die Exoskelett-Plattenstruktur (18) eine im Wesentlichen ringförmige Oberfläche hat.

21. Plattenstruktur nach Anspruch 19 oder 20, bei der jede Platte (18) Anspruch 14 erfüllt, wobei die Exoskelett-Plattenstruktur (18) einen Radius hat, der gleichmäßig entlang der Maschinenmittelachse variiert.

22. Gasturbinenstruktur, die eine Verbrennungskammer (14) umfasst, deren Ummantelungsschale (17) eine Exoskelett-Plattenstruktur (18) nach einem der Ansprüche 19 bis 21 hat, die damit verbunden ist.

23. Gasturbinenstruktur nach Anspruch 22, bei der die Verbindung zwischen der Exoskelett-Plattenstruktur (18) und der Ummantelungsschale (17) durch Stifte erfolgt, die durch Öffnungen (22) in der Exoskelett-Plattenstruktur (18) vorragen.

24. Verfahren zum Bilden einer allgemein ringförmigen Exoskelett-Plattenstruktur über einer ringförmigen Ummantelungsschale (17), die das Verbinden mehrerer teilringförmiger Platten (18) nach einem der Ansprüche 1 bis 18 mit der Ummantelungsschale (17) umfasst, wobei ihre Kanten miteinander verbunden sind und ihre Rippen (40) ineinandergreifen, um das Biegen entlang der Kanten zu verhindern.

25. Verfahren nach Anspruch 24, das das Verstiften der Rippen (40) von benachbarten Platten (18a, 18b) während der Montage und dann das Entfernen der Stifte (48) vor dem Gebrauch umfasst.

26. Verfahren nach Anspruch 24 oder 25, bei dem jede Platte (18) Anspruch 5 entspricht, welches das Befestigen der Buchsenabdeckung (44) umfasst, nachdem die Rippen (40) miteinander verbunden wurden.

## Revendications

1. Tuile généralement partiellement annulaire (18) comportant des moyens de connexion à une enveloppe de doublure annulaire sous-jacente (17) et comportant au moins une nervure (40) s'étendant de façon circonférentielle en travers d'une surface extérieure de la tuile (18) et faisant saillie au-delà d'un bord de la tuile, de telle sorte que lors de l'utilisation, des tuiles similaires (18) soient reliées à des bords opposés par l'engagement mutuel d'une nervure saillante (40) d'une première tuile (18a) avec la nervure (40) d'une tuile voisine (18b), de manière à former une structure complète essentiellement annulaire, l'engagement mutuel étant réalisé de telle sorte que les nervures (40) de tuiles voisines (18, 18a, 18b) puissent coulisser circonférentiellement de façon relative de manière à permettre la dilatation et la contraction thermiques de la structure annulaire lors de l'utilisation, mais aussi de manière à résister à une flexion relative des tuiles voisines autour de leurs bords reliés, afin de conférer de la rigidité à la structure, dans laquelle ladite au moins une nervure (40) présente à une extrémité une partie (41) qui fait saillie au-delà du bord de tuile, et à l'extrémité opposée une emboîture (42) destinée à recevoir de façon coulissante la partie saillante (41) de la nervure (40) d'une tuile similaire voisine (18a, 18b) de manière à former ledit engagement mutuel, l'emboîture (42) fournissant la force de réaction radiale pour empêcher la flexion relative des tuiles (18) lors de l'utilisation.

2. Tuile selon la revendication 1, comportant une multiplicité d'ouvertures (32) pour impacter un écoulement de gaz à travers la tuile (18) et dans l'espace (23) entre la tuile (18) et l'enveloppe de doublure (17) lors de l'utilisation.

3. Tuile selon la revendication 1 ou la revendication 2, comprenant une bande (30) présentant un rayon différent à l'un de ses bords, de telle sorte que le bord opposé d'une tuile similaire voisine (18a, 18b) recouvre cette bande (30), lors de l'utilisation, de manière à permettre aux tuiles (18) de présenter une surface annulaire essentiellement continue.

4. Tuile selon la revendication 1, dans laquelle l'emboîture (42) comporte une nervure parallèle supplémentaire (43) sur un côté de l'extrémité de la nervure principale (40), et un recouvrement supérieur d'emboîture (44) qui relie les nervures parallèles (40, 43).

5. Tuile selon la revendication 4, dans laquelle l'emboîture (42) s'étend de façon circonférentielle sur entre 1/5 et 1/2 de la largeur de la tuile (18).

6. Tuile selon la revendication 5, dans laquelle l'emboîture (42) s'étend de façon circonférentielle sur entre 1/4 et 1/3 de la largeur de la tuile (18).

7. Tuile selon l'une quelconque des revendications précédentes, dans laquelle la nervure (40) présente une section rectangulaire avec un bord connecté à la tuile (18), et la nervure (40) fait saillie radialement à partir de la tuile (18) de façon normale par rapport à sa surface.

8. Tuile selon l'une quelconque des revendications précédentes, comprenant au moins deux nervures circonférentielles parallèles (40).

9. Tuile selon l'une quelconque des revendications précédentes, comprenant au moins une nervure de raidissement s'étendant axialement (45) qui croise ladite (lesdites) nervure(s) circonférentielle(s) (40).

10. Tuile selon l'une quelconque des revendications précédentes, dans laquelle lesdits moyens de connexion à ladite enveloppe de doublure annulaire sous-jacente (17) comportent des ouvertures (22) à travers les tuiles (18) destinées à coopérer avec des crampons saillant radialement à partir de l'enveloppe de doublure (17).

11. Tuile selon l'une quelconque des revendications précédentes, constituée d'un alliage de métal soudable à haute résistance capable de supporter 500°C.

12. Tuile selon la revendication 1, constituée d'un alliage d'indium et de cobalt.

13. Tuile selon l'une quelconque des revendications précédentes, dans laquelle la (les) nervure(s) est (sont) connectée(s) à la tuile (18) par brasage ou par soudage au tungstène en atmosphère inerte (TIG) afin de transmettre une charge de cisaillement lors de l'utilisation.

14. Tuile selon l'une quelconque des revendications précédentes, présentant un rayon qui varie uniformément le long de l'axe central du moteur.

15. Tuile selon la revendication 1, comprenant des moyens pour fixer temporairement l'une à l'autre une nervure (40) d'une tuile (18a) à l'emboîture (42) d'une tuile voisine (18b) contre tout mouvement de glissement circonférentiel, afin de faciliter l'assemblage, la nervure (40) et l'emboîture (42) de chaque tuile (18, 18a, 18b) étant formées de manière à recevoir les éléments de fixation.

16. Tuile selon la revendication 15, dans laquelle les moyens de fixation comprennent des broches (48), et les nervures sont formées de manière à recevoir les broches (48) s'étendant axialement de la tuile (18).

17. Tuile selon l'une quelconque des revendications précédentes, dans laquelle la tuile (18) sous-tend de façon circonférentielle un angle compris entre 5 degrés et 15 degrés.

18. Tuile selon la revendication 17, qui sous-tend un angle circonférentiel compris entre 10 degrés et 15 degrés.

19. Structure exo-squelettique de tuiles essentiellement annulaire pour une enveloppe de doublure annulaire (17) destinée à faciliter le refroidissement de l'enveloppe de doublure (17) par un écoulement de gaz axial (31) le long de l'espace (23) entre ceux-ci, comprenant des tuiles partiellement annulaires (18) selon l'une quelconque des revendications précédentes, les tuiles (18) étant reliées les unes aux autres dans le sens du bord par l'engagement mutuel de nervures externes s'étendant de façon circonférentielle (40) sur les surfaces extérieures des tuiles (18), l'engagement mutuel étant tel que les nervures (40) de tuiles voisines (18, 18a, 18b) puissent coulisser circonférentiellement de façon relative de manière à permettre la dilatation et la contraction thermiques de la structure annulaire lors de l'utilisation, mais aussi de manière à résister à une flexion relative des tuiles voisines autour de leurs bords reliés, afin de conférer de la rigidité à la structure; les tuiles (18) comportant des moyens de connexion à l'enveloppe de doublure sous-jacente (17) lors de l'utilisation.

20. Structure de tuiles selon la revendication 19, dans laquelle chaque tuile (18) est une tuile selon la revendication 3, les tuiles (18) étant reliées en faisant en sorte que la bande (30) d'une tuile (18a) soit recouverte par le bord opposé d'une tuile voisine (18b) de telle sorte que la structure exo-squelettique de tuiles (18) présente une surface essentiellement annulaire.

21. Structure de tuiles selon la revendication 19 ou 20, dans laquelle chaque tuile (18) est une tuile selon la revendication 14, dans laquelle la structure exo-squelettique de tuiles (18) présente un rayon qui varie uniformément le long de l'axe central du moteur.

22. Structure de turbine à gaz comprenant une chambre de combustion (14) dont l'enveloppe de doublure (17) présente une structure exo-squelettique de tuiles (18) selon l'une quelconque des revendications 19 à 21 connectée à celle-ci.

23. Structure de turbine à gaz selon la revendication 22, dans laquelle l'interconnexion entre la structure exo-squelettique de tuiles (18) et l'enveloppe de doublure (17) s'effectue par l'intermédiaire de crampons qui font saillie à travers des ouvertures (22) dans la structure exo-squelettique de tuiles (18).

24. Procédé pour former une structure exo-squelettique de tuiles sur une enveloppe de doublure annulaire (17), comprenant la connexion d'une pluralité de tuiles partiellement annulaires (18) selon l'une quelconque des revendications 1 à 18 à l'enveloppe de doublure (17) avec leurs bords reliés les uns aux autres et leurs nervures (40) s'engageant les unes avec les autres dans le but d'empêcher toute flexion le long des bords.

25. Procédé selon la revendication 24, comprenant l'embrochage des nervures (40) de tuiles voisines (18a, 18b) les unes avec les autres pendant l'assemblage, et ensuite l'enlèvement des broches (48) avant l'utilisation.

26. Procédé selon la revendication 24 ou la revendication 25, dans lequel chaque tuile (18) est une tuile selon la revendication 5, comprenant la connexion du recouvrement supérieur d'emboîture (44) après que les nervures (40) aient été engagées les unes avec les autres.
